# EUROPEAN PATENT SPECIFICATION

(11) **EP 1 371 156 B1**
(45) Date of publication and mention of the grant of the patent: **21.04.2010**
(21) Application number: 02702694.7
(22) Date of filing: 08.03.2002
(51) Int. Cl.: H04B 10/17, G02F 1/01, G02F 1/139

(54) **DYNAMIC GAIN EQUALIZER**
DYNAMISCHER VERSTÄRKUNGSENTZERRER
EGALISATEUR DE GAIN DYNAMIQUE

(30) Priority: 08.03.2001 IL 14192701; 24.04.2001 IL 14277301
(43) Date of publication of application: 17.12.2003
(73) Proprietor: Xtellus Inc., Florham Park, NJ 07932 (US)
(72) Inventor: COHEN, Gil, Livingston, NJ 07039 (US); SUH, Seongwoo, Florham Park, NJ 07932 (US); COREM, Yossi, 99590 Beit Shemesh (IL)
(74) Representative: White, Duncan Rohan
(86) International application number: PCT/IL2002/000187
(87) International publication number: WO 2002/071660

(56) References cited:
- WO-A-94/28456
- US-A- 5 745 271
- US-A- 5 825 448
- US-A- 5 933 270
- US-B1- 6 175 667
- DOERR C R ET AL: "INTEGRATED WDM DYNAMIC POWER EQUALIZER WITH POTENTIALLY LOW INSERTION LOSS" IEEE PHOTONICS TECHNOLOGY LETTERS, IEEE INC. NEW YORK, US, vol. 10, no. 10, 1 October 1998 (1998-10-01), pages 1443-1445, XP000786676 ISSN: 1041-1135

## Description

### FIELD OF THE INVENTION

The present invention relates to the field of gain equalizers for use in fiber optical systems, especially those which are dynamically controlled in real time.

### BACKGROUND OF THE INVENTION

Gain equalizers are important components in fiber optical communication systems. One of the main functions of an optical gain equalizer is to bring all of the separate wavelength signals in a data transmission to the same amplitude, in order to optimize system spectral power budget. The functional requirements of an optical gain equalizer for use in such a system are that it should vary the intensity profile of the light transmitted as a function of the wavelength of the light, and without appreciably altering the spatial, temporal, or polarization distribution of the light beam.

Many types of optical gain equalizers have been described in the prior art. In US Patent No. 6,144,488, to H. Okuno, for "Optically Amplifying Device with Gain Equalizing Function", there is described a semiconductor optical amplifier, in which the gain for each wavelength is varied to provide gain equalization functionality. In US Patent No. 6,034,812, to T. Naito, for "Gain Equalizer and Optical Transmission System having the Gain Equalizer" there is described a system including three cascaded gain equalizers, the first having a maximum loss at or near the optical amplifier's peak gain, and the others having periodic loss characteristics, arranged such that they fall at or near a wavelength giving one of two gain peaks remaining when the gain characteristic of the optical amplifier the has been equalized by the first equalizer only.

Both of these prior art gain equalizers are comparatively complex, involving a large number of components, and may require careful alignment for good operation. Another type of gain equalizer has been described in the co-pending US Provisional Patent Application No. 60/327,680 for "Fiber Optical Gain Equalizer", and its corresponding PCT application, assigned to the applicant of the present application, and herewith incorporated by reference each in its entirety. This gain equalizer however, though very compact and simple in operation, utilizes a custom stepped substrate construction, which is not a standard available component, and so may make the gain equalizer less attractive for small quantity production runs. Furthermore, the band resolution, design flexibility and dynamic range may be limited. There thus exists an important need for an electronically controllable optical gain equalizer, of simple construction and operation, which can perform spectral signal processing on an optical signal input to it, including dynamic gain equalization, and which overcomes some of the disadvantages of prior art gain equalizers.

There is disclosed by Doerr, C. R. et al in "Integrated WDM Dynamic Power Equalizer with Potentially Low Insertion Loss", IEEE Photonics Technology Letters, IEEE Inc. New York, US, vol. 10, ko. 10, 1 October 1988, Pages 1443-1445, a design concept for dynamically and chromatically variable transmissivity devices for controlling channel powers in wavelength-division-multiplexed systems in which a decrease, in attenuation range is traded for a decrease in insertion loss.

The present invention seeks to provide a new compact dynamic gain equalizer in which a multichannel input light signal is split into its separate wavelength components preferably by means of a dispersive element such as a grating. The spatially separated wavelength components are passed through a linear array of variable optical attenuators based on variable phase changing elements which modulate the phase of part of the cross section of the light. The array of attenuators are preferably disposed along the same direction as the direction of the spatial separation of the wavelength components, such that different wavelengths preferably pass through successive attenuators in the array. The separate attenuated wavelength components are then recombined, preferably by means of another dispersive element and the recombined, multi-wavelength light signal is output. The attenuation level of each variable optical attenuator is adjusted preferably according to the output of the light as a function of its wavelength components, and in this way, the overall wavelength profile of the output light signal can be adjusted to any predefined form, whether a flattened spectral profile, as in gain equalization applications, or a spectral compensating profile, or a channel blocking profile. The output level of the light as a function of its wavelength components is preferably obtained from a spectrally selective detector system, such as a sample of the output beam, dispersed spatially and detected on a linear detector array, such that the output for each wavelength range is determined.

The gain equalizer can preferably be constructed in a transmissive embodiment, in which case separate dispersive and recombining elements are used. Alternatively and preferably, it can be provided in a reflective embodiment, in which case a single dispersive element is used, and a reflective element is disposed in the optical path after the array of variable optical attenuators, and is operative to return the spatially separated wavelength components back to the single dispersive element for recombining as the multi-wavelength processed output signal.

The invention provides a gain equalizer in accordance with claim 1 below and a multichannel optical gain equalizer in accordance with claim 14 below.

In the above described gain equalizer, the variable optical attenuators may preferably be disposed along the dispersion direction such that each of the attenuators is traversed by different wavelength components of the light. At least one of the attenuators is preferably varied so as to vary the level of light traversing the attenuator. Furthermore, in any of the above embodiments, either or both of the input and output ports may be an optical fiber.

Furthermore, in accordance with still another preferred embodiment of the present invention, the above mentioned gain equalizer also comprises a controller operative to vary the attenuation of at least one of the variable attenuators, such that the light passing through the attenuator has a predefined level. The controller is preferably provided with signals corresponding to the power level of the wavelength components from a spectrally selective detector. The signals are preferably utilized to adjust the attenuation of any of the variable attenuators. The detector is preferably located such that it measures the power level of wavelength components in the output beam, so that closed loop control of the wavelength profile of the output beam is obtained.

Alternatively and preferably, the detector is located such that it measures the power level of the wavelength components of the light in the input port, in order to characterize the input spectrum for correction or levelling.

The above-mentioned spectrally selective detector is preferably a linear detector array utilizing one of the dispersive elements for performing the spectral selection. Furthermore, in accordance with a further preferred embodiment of the present invention, the signals corresponding to power levels of the wavelength components are obtained by means of a power splitter located in the path of the wavelength components of the light.

Additionally, in any of the above-mentioned embodiments of the present invention, the phase changing element is preferably a liquid crystal element. Furthermore, either or both of the dispersive elements are preferably gratings. The optical system can preferably also include a half wave plate serially with the plurality of attenuators, operative to reduce the polarization dependent loss of the gain equalizer

There is further provided in accordance with yet another preferred embodiment of the present invention, a gain equalizer comprising:
(i) a port receiving light comprising at least two wavelength components,
(ii) a dispersive element receiving the light and spatially dispersing the wavelength components of the light along a dispersion direction,
(ii) a plurality of variable optical attenuators disposed along the dispersion direction, and
(iv) a reflective surface operative to reflect the light after passage through at least part of at least one of the plurality of variable optical attenuators back to the dispersive element, so as to combine the wavelength components of the reflected light into an output beam at the port, wherein at least one of the variable optical attenuators comprises a variable phase changing element operative to change the phase of part of the cross section of light passing through it.

In the above described gain equalizer, the variable optical attenuators may preferably be disposed along the dispersion direction such that each of the attenuators is traversed by different wavelength components of the light. At least one of the attenuators is preferably varied so as to vary the level of light traversing the attenuator. Furthermore, in any of the above embodiments, the port may be an optical fiber.

Furthermore, in accordance with still another preferred embodiment of the present invention, the above mentioned gain equalizer also comprises a controller operative to vary the attenuation of at least one of the variable attenuators, such that the light passing through the attenuator has a predefined level. The controller is preferably provided with signals corresponding to the power level of the wavelength components from a spectrally selective detector. The signals are preferably utilized to adjust the attenuation of any of the variable attenuators. The detector is preferably located such that it measures the power level of wavelength components in the output beam, so that closed loop control of the wavelength profile of the output beam is obtained.

Alternatively and preferably, the detector is located such that it measures the power level of the wavelength components of the incoming light at the port, in order to characterize the input spectrum for correction or leveling.

The above-mentioned spectrally selective detector is preferably a linear detector array utilizing one of the dispersive elements for performing the spectral selection. Furthermore, in accordance with a further preferred embodiment of the present invention, the signal corresponding to the power level of the wavelength components are obtained by means of a power splitter located in the path of the wavelength components of the light.

Additionally, in any of the above-mentioned reflective embodiments of the present invention, the phase changing element is preferably a liquid crystal element. Furthermore, either or both of the dispersive elements are preferably gratings. The optical system can preferably also include a quarter wave plate serially with the plurality of attenuators, operative to reduce the polarization dependent loss of the gain equalizer. Furthermore, the input light received by the port and the output beam can preferably be separated either by means of a dual fiber collimator or by means of a circulator.

There is further provided in accordance with still another preferred embodiment of the present invention, a multichannel optical gain equalizer comprising:
(i) an input fiber receiving a multi-wavelength input,
(ii)a demultiplexer fed by the input fiber, having a plurality of output wavelength channels,
(iii) an output fiber outputting a multi-wavelength output,
(iv) a multiplexer feeding the output fiber, having a plurality of input wavelength channels,
(v) a plurality of variable optical attenuators disposed between the output channels of the demultiplexer and the input channels of the multiplexer, and
(vi) at least one signal detector detecting the power in at least one of the input wavelength channels of the multiplexer, and operative to adjust the attenuation of the attenuator in the at least one input wavelength channel according to the level of the signal detected, wherein at least one of the variable optical attenuators comprises a variable phase changing unit operative to change the phase of part of the cross section of light passing through it.

In accordance with a further preferred embodiment of the present invention, in the above described multichannel gain equalizer, the at least one signal detector detecting the power in at least one of the input wavelength channels of the multiplexer is a spectrally selective detector in series with the output fiber. This detector may preferably be located remotely from the gain equalizer. Furthermore, the demultiplexer may preferably comprise a dispersive grating, such that the plurality of output wavelength channels are spatially dispersed. In addition, the multiplexer may comprise a dispersive grating, such that the spatially dispersed plurality of wavelength channels are combined into one channel. In any of the above-mentioned multichannel gain equalizers, the phase changing element is preferably a liquid crystal element.

It is to be understood that throughout this application, the term gain equalizer is used, and is so claimed, to mean a system which varies the intensity of the light transmitted as a function of the wavelength of the light, whether the system is operative to provide a flat wavelength profile, as implied by the term "gain equalization" or whether the desired result is any other spectral profile, such as a compensating profile, or a band blocking profile.

Furthermore, it is to be understood that throughout this application, the term light is used, and is so claimed, to mean electromagnetic radiation, whether in the visible, ultra-violet or the infra-red regions, or any other useful region of the spectrum.

### BRIEF DESCRIPTION OF THE DRAWINGS

The present invention will be understood and appreciated more fully from the following detailed description, taken in conjunction with the drawings in which:
Fig.1 is a schematic illustration of a multichannel gain equalizer, constructed and operative according to a preferred embodiment of the present invention;
Fig. 2 is a schematic drawing of a face view of a preferred embodiment of a single section of a variable attenuating element, such as could preferably be used in the preferred embodiment of Fig. 1;
Fig. 3 is a schematic graph of the relationship of the attenuation obtained through the element of Fig. 2 as a function of its applied voltage;
Fig. 4 schematically illustrates a dynamic gain equalizer for use in a fiber optical system, constructed and operative according to a preferred embodiment of the present invention;
Figs. 5A and 5B are face views of two different multiple pixel liquid crystal elements suitable for use as the pixellated attenuating element in the dynamic gain equalizer illustrated in Fig. 3;
Fig. 6 is a graph illustrative of the attenuation obtained as a function of the wavelength of the traversing light from a single pixel of the element of Figs. 5A or SB;
Figs. 7 and 8 are schematic graphs showing how a dynamic gain equalizer according to the present invention, can be preferably used to process an incoming signal with a non-uniform wavelength profile;
Fig. 9 is a schematic block diagram showing the electronic and optical components used in a gain equalizer according to one preferred embodiment of the present invention;
Fig. 10 is a schematic illustration of a system, according to a further preferred embodiment of the present invention, for practically implementing the schematic block diagram of Fig. 9;
Fig. 11 schematically illustrates an alternative and preferable method of handling the monitored power to that described in Fig. 10;
Fig. 12 is a schematic drawing of the optical arrangement of a reflective embodiment of a dynamic gain equalizer, constructed and operative according to another preferred embodiment of the present invention;
Fig. 13 schematically illustrates another preferred reflective embodiment of the gain equalizer of the present invention; and
Fig. 14 is a schematic cross section of another preferred embodiment of the present invention, in which the gain equalizer is constructed in a compact monolithic form.

### DETAILED DESCRIPTION OF PREFERRED EMBODIMENTS

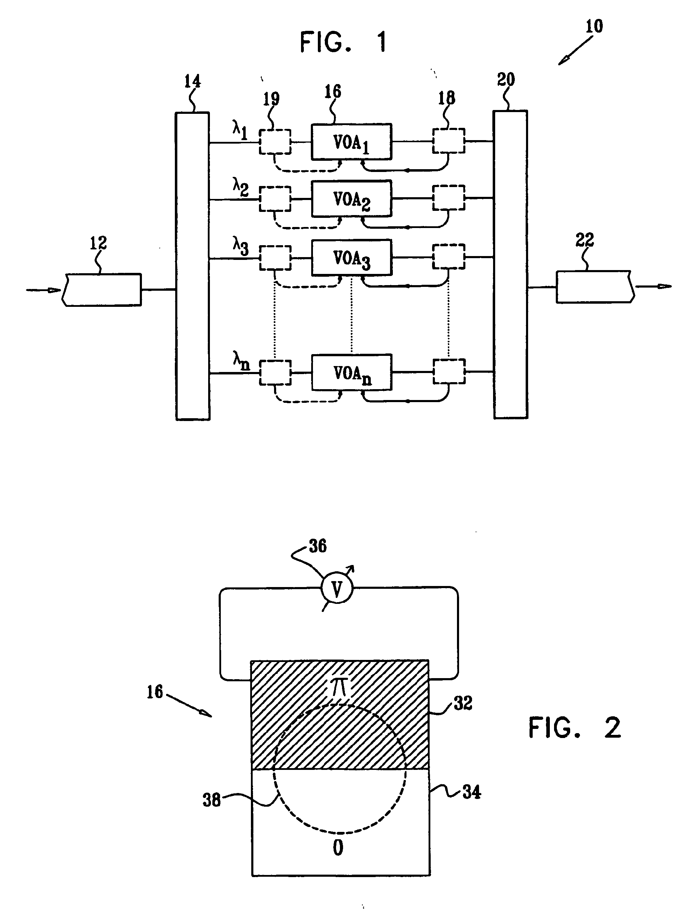

Reference is now made to Fig. 1, which is a schematic illustration of a multichannel gain equalizer 10, constructed and operative according to a preferred embodiment of the present invention. The gain equalizer utilizes an array of variable optical attenuator elements 16, preferably of a type which can be provided in high density planar geometry. Particularly suitable for use in the equalizer of the present invention are the preferred attenuators described in co-pending Israel Patent Application Nos. 141927 and 142773, for "Fiber Optical Attenuator", and their corresponding PCT applications (WO 02/071660, WO 02/071133), both assigned to the applicant of the present application, and both herewith incorporated by reference, each in its entirety. However, any other suitable type of variable attenuator may equally well be used in the present invention, such as the commonly used liquid crystal attenuators using polarizing effects. Other examples of such attenuators are given in the background of the above-mentioned applications.

The input optical signal, composed of a number of separate signals, each at its own characteristic wavelength, is input by means of the input fiber 12. The function of the gain equalizer 10 is to bring all of the separate wavelength channels to the same amplitude, in order to optimize system power spectrum. Alternatively and preferably, the gain equalizer can be programmed to provide a predetermined wavelength output profile from the input signals. The input signal is input into a demultiplexer or a wavelength dispersive component 14, which separates the individual wavelength components of the signal into n separate channels, λ₁, λ₂, λ₃, ...λₙ, one for each wavelength band. Such a demultiplexer function can preferably be provided by a dispersive grating, transmissive or reflective, though it is to be understood that any other suitable dispersive element may be used for the execution of the present invention. Each of these channels is input into its own variable optical attenuator 16, VOA₁, VOA₂, ....... VOAₙ, preferably of the type described in the above-mentioned patent applications. The levels of the signals in each channel 1, 2, .....n, are detected, preferably by means of in-line signal detector elements, 18, and a feedback signal from each detector element is used to control the level of attenuation of each VOA. The resulting signals from all of the separate channels are thus preferably brought to the same level, if this is the desired outcome, and are recombined in a multiplexer unit 20, into a multi-channel, gain-equalized, output signal for outputting through the output fiber 22. The multiplexer unit 20 can preferably be a second grating, or any other suitable wavelength combining component.

In order to enable the gain equalizer to operate bidirectionally, each of the "input" channels can optionally be provided with its own in-line signal detector elements 19, such that when the unit is used in the reverse direction, or when the input comes from the reverse direction, these detector elements 19 are operative to detect the attenuated output power level, instead of the detector elements 18 on the other side of the VOA's. Means should preferably be provided to determine in which direction the signal is travelling, since the equalizer must be controlled by the light signal detected after attenuation. The direction of use can either be predetermined by the system configuration, or can be determined on-line during use by comparing the signal levels detected by detector elements 18 and 19. Alternatively and preferably, the input detectors 19 can be used for monitoring , the input power, if so required.

The gain equalizer preferably utilizes an array of integrated variable optical attenuators as this enables the construction of a particularly compact gain equalizer. Alternatively and preferably, it can be constructed of separate variable optical attenuators of the type shown in the above mentioned Israel Patent applications, in a free-space embodiment. Such embodiments can include both transmissive and reflective embodiments of variable optical attenuators.

According to further preferred embodiments of the present invention, detector elements such as those labeled 18 and 19 in Fig. 1, can be installed anywhere in the optical channel where the power level is to be monitored. The signal monitoring can even be performed remotely from the gain equalizer, such as at the receiver station or at an en-route repeater unit, either of which could be at a considerable distance from the gain equalizer itself In this way, the gain equalization is performed on the basis of the signal strengths of each channel detected at the destination point of the signal, where the gain equalization is important for the system power budget.

In order to illustrate the operation of the attenuator, reference is now made to Fig. 2, which is a schematic drawing of a face view of a preferred embodiment of a single section of a variable attenuating element, such as could preferably be used as the element 16 shown in Fig. 1. The attenuating element may be similar to any of those described in co-pending Israel Patent Application Nos. 141927 and 142773, and their corresponding PICT applications (WO 02/071660, WO 02/071133), both assigned to the applicant of the present application, and both herewith incorporated by reference, each in its entirety. The operation of such a variable optical attenuator can be illustrated by reference to Fig. 2, which is a view in the direction of the light propagation, of the cross-section of a preferred embodiment of such a variable optical attenuator 16. The cross section of the light beam of one wavelength passing through the attenuator is shown in dotted outline 38. The light is input from a single mode fiber, and is thus incident on the face of the attenuator element as a low order mode. In the preferred embodiment shown, a liquid crystal element is used, with pixelated electrodes on the surfaces of the element, preferably dividing the element into two halves. A control voltage is applied, preferably to a pair of electrodes on one half 32 of the element, and at its maximum designed value, this voltage modifies the liquid crystal under the electrode, such that the light passing through that part of the element is phase shifted by π relative to its phase without any voltage applied. The liquid crystal under the other part 34 of the element is unchanged. The light beam 38 passing through the liquid crystal element is therefore transformed from a low-order symmetric mode to a mode having an anti-symmetric field distribution, such that it cannot couple to the symmetric fundamental lowest order mode of the output fiber. The light is converted to the HE₁₂ and higher order asymmetric modes, which cannot propagate in the output fiber. In this voltage state, the attenuator is at its maximum value, ideally fully blocking the light passage. For intermediate values of applied voltage, when the additional phase shift for the light passing through pixel 32 is less than π, only part of the light is transformed to the anti-symmetric, higher order mode, and the light is thus partially attenuated. The level of light transmitted is thus a function of the applied voltage.

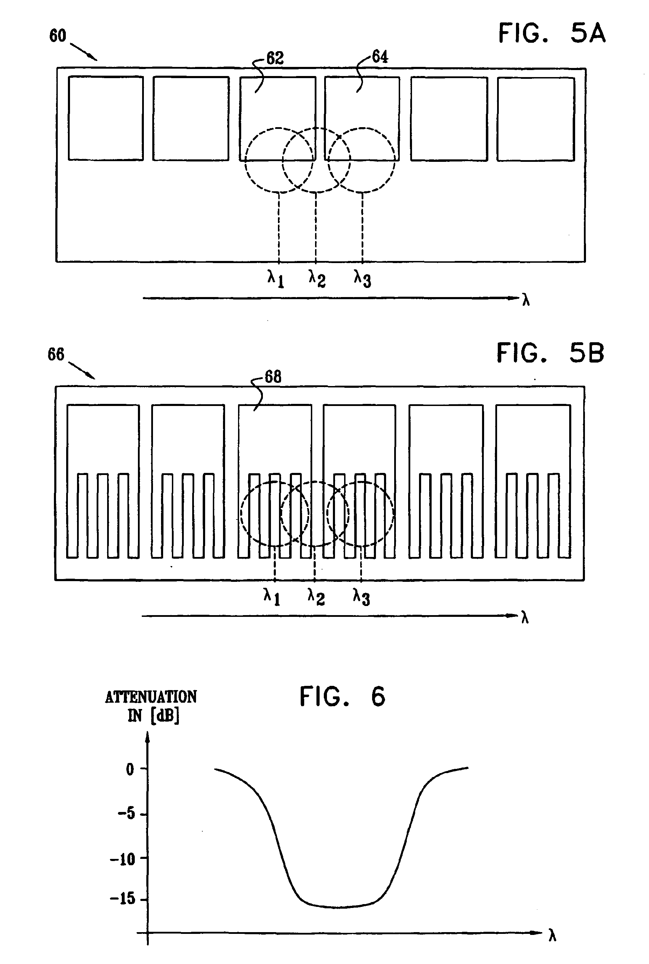

Though Fig. 2 shows a simple pixel geometry, a number of different pixel designs can equally well be used, such as are described in the above-mentioned co-pending Israel patent applications. A particularly convenient geometry is a stripe geometry, in which the liquid crystal is divided into a number of thin pixelated strips, since this geometry is less susceptible to misalignment of the optical path through the element. An example of the use of such a geometry is shown in Fig. 5B hereinbelow.

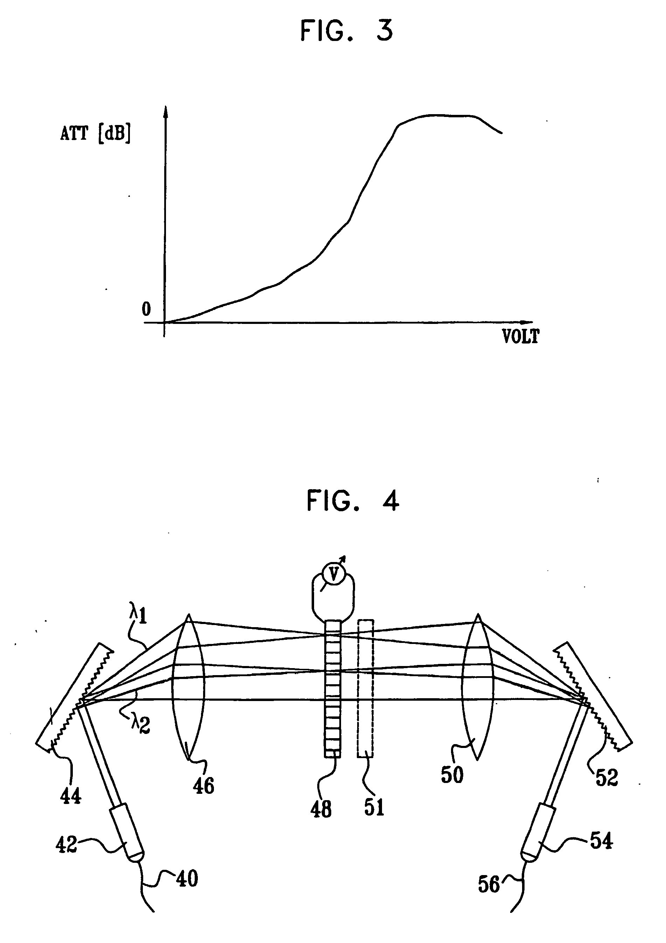

The relationship of the attenuation obtained through the element as a function of the applied voltage V is shown in the schematic graph of Fig. 3. It is to be understood that though the electrode structure of Fig. 2 has been described in terms of two separate electrodes on each surface, each covering half of the element surface, in practice, there is need for a phase control electrode preferably only on one half of the element in order to generate the higher order anti-symmetric mode.

Reference is now made to Fig. 4, which illustrates schematically a dynamic gain equalizer for use in a fiber optical system, constructed and operative according to a preferred embodiment of the present invention. The preferred embodiment shown in Fig. 4 uses the conceptual construction shown in the embodiment of Fig. 1 with the variable optical attenuator elements described in Fig. 2. The signal from the input fiber 40 to be equalized, is input through a fiber optical collimator 42, such as a GRIN rod lens, and is directed onto a wavelength dispersive element 44, which is preferably a reflective grating element. It is to be understood that any other suitable dispersive element may also be used for the execution of the present invention, including transmissive elements, provided that the correct geometrical arrangements are made for handling the signals therefrom. The grating is operative to disperse the signal spatially into its wavelength components, each specific wavelength range being directed at a different angle. The beams are imaged by means of a first focussing lens 46, preferably located at a distance equal to its effective focal length from the diffraction grating onto a pixellated attenuating element 48, whose construction will be described hereinbelow. For the sake of clarity, only two dispersed wavelengthsλ₁ and λ₂ are shown in Fig. 4, but it is to be understood that the number of wavelength channels is limited only by the resolution of the system, which is dependent, *inter alia,* on the number and spacing of the pixels and the optical design. The light from each dispersed wavelength range is imaged to pass through a different region of the pixelated element 48. The pixels are switched by means of control voltages V applied through an array of transparent electrodes on the liquid crystal surfaces, as described below, though for reasons of clarity, only one applied voltage is shown in Fig. 4.

After passing through the liquid crystal element 48, the light signals are imaged, preferably by means of a second focusing lens 50, onto another dispersive grating 52. According to a preferred embodiment of the present invention, the attenuating element 48 is preferably located at the back focal plane of the focusing lens 46, and at the front focal plane of the lens 50, such that the overall assembly has a 4-f configuration, for optimum optical performance. Grating 52 is operative to recombine the different wavelengths λ₁, λ_{2,}λ₃, ....λₙ coming from their respective wavelength-dispersed directions, into the output fiber collimator 54, and from there, into the output fiber 56. According to a further preferred embodiment, a half wave plate 51 can be inserted after the liquid crystal attenuating element in order to minimize the polarization dependent loss of the grating or to allow the use of two identical liquid crystal cells, as is known in the art.

As is known, light transmitted through optical fibers generally has randomized polarization directions. It is therefore important that the elements used in the present invention be polarization independent. A number of methods are available for rendering the liquid crystal attenuator element 48 insensitive to the polarization of the incoming light, as described in the above-mentioned Israel Patent Application No. 142773 and its corresponding PCT application (WO 02/071133).

Comparing the preferred embodiment shown in Fig. 4 with the preferred embodiment outlined in Fig. 1, the demultiplexer operation of item 14 in Fig. 1 is performed by the grating 44 of Fig. 4, while the multiplexing operation of item 20 in Fig. 1 is performed by the grating 52 of Fig. 4.

Reference is now made to Fig. 5A, which is a face view of a multiple pixel liquid crystal element 60, suitable for use as the pixelated attenuating element 48 in the dynamic gain equalizer illustrated in Fig. 3. The element shown in Fig. 5A has 6 pixels, though it is to be understood that in practice, many more pixels may be used. Each of the pixels is preferably operative according to the pixel embodiment shown and described in Fig. 2, and the individual circular cross sectional beams for each wavelength stretched into an ellipse-like continuum of overlapping spots, depending on the spectral content of the input light. Furthermore, the circular shape of the beam at a single wavelength may be changed to an elliptic form depending on the design or the geometry of the optical system. The element is disposed vertically in the embodiment shown in Fig. 4, such that successive wavelengths of the spatially dispersed light traverse the element at different successive locations on the element, as indicated by the arrow marked λ. By way of example, if at a wavelength λ₁, the dispersed input beam falls exactly on the center of a pixel 62, when the correct control voltage V is applied to the electrodes of pixel 62, the light of wavelength λ₁ is attenuated maximally. At different control voltages, the attenuation can be selected accordingly. As the wavelength of the light changes, the dispersed beam moves away from the center of the pixel 62, and the attenuation decreases. At wavelength λ₂, where the light falls exactly between two pixels, the attenuation is minimal, and at wavelength λ₃, where the light falls at the center of a pixel 64, the attenuation is maximum again. This explanation assumes that all of the pixels have applied voltages which provide attenuation for the individual pixel elements.

Reference is now made to Fig. 5B which is a schematic drawing of a multiple pixel liquid crystal element 66, similar to that of Fig. 5A, except that the individual pixels 68 have a striped electrode pattern over the whole of their area, thus providing better uniformity and better freedom from optical misalignment.

Reference is now made to Fig. 6, which is a graph illustrative of the attenuation obtained as a function of the wavelength of the traversing light from a single pixel of the element of Figs. 5A or 5B, while the other pixels are in a non-attenuating state. As is seen in Fig. 6, the attenuation is maximum at the wavelength corresponding to the center of the pixel profile. As the wavelength changes such that the light does not traverse the center of the pixel, the attenuation decreases until a minimum attenuation level is reached when the wavelength is such that the beam does not illuminate the pixel at all.

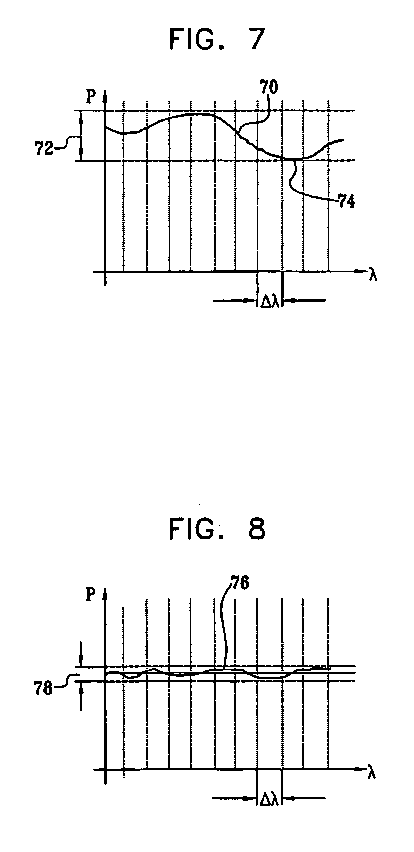

Reference is now made to Figs. 7 and 8, which are schematic graphs showing how a dynamic gain equalizer, according to the present invention, can be preferably utilized to process an incoming signal with a non-uniform wavelength profile, such that the output signal has a flattened wavelength profile, in the process known in the art as gain equalization. In Fig. 7 there is shown the uneven wavelength profile of an input optical signal 70, which it is desired to flatten. The variation in power is given by the value of the gain-tilt 72. The wavelength spectrum is divided up into bands, each band Δλ being represented by a pixel on the attenuating element 60 of Fig. 5A, or 66 of Fig. 5B. The attenuation of each wavelength band is individually adjusted by means of the voltage applied to the electrodes of each pixel, such as to bring the overall level of the power transmitted to just below the minimum power level 74 of the wavelength profile. The resulting wavelength profile obtained after this gain equalization process is shown in Fig. 8, where it is observed that the output profile 76 is substantially flatter than the initially input profile. The error level 78, which is the departure of the output profile from a truly flat level, is a result of the discrete nature of the pixel structure in the attenuating element, and of the spread of the individual pixels. The greater the number of pixels, and the smaller the spread, the flatter the possible output profile.

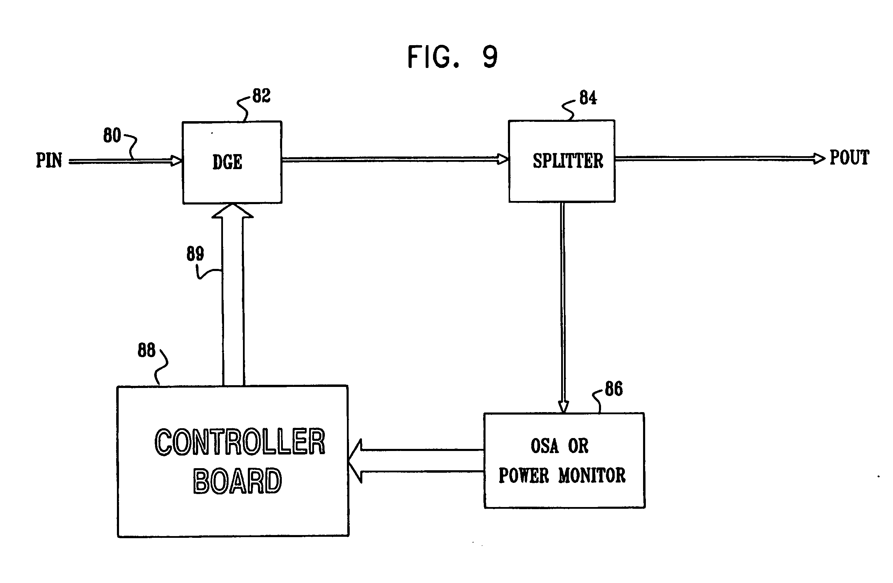

Reference is now made to Fig. 9, which is a schematic block diagram showing the electronic and optical components used to provide the necessary gain equalizing voltage signals to each pixel, according to one preferred embodiment of the present invention. The input signal 80 to be equalized is input at Pᵢₙ to the dynamic gain equalizer 82, constructed according to one of the above-described preferred embodiments. The output signal passes through a broadband power splitter 84, where a portion of the signal is monitored. This monitor signal is analyzed as a function of wavelength either in an optical spectrum analyzer or in a wavelength sensitive optical power monitor 86. Such spectrally sensitive power detectors, though generally thought of as stand alone laboratory instruments, can preferably be provided in miniature dedicated form, such that they can be integrated into the casing of a dynamic gain equalizer according to various preferred embodiments of the present invention. The output signal from such a monitor is input to a controller board 88, where the signal representing the optical output power level at each wavelength is compared with the desired power level, according to a predetermined function defining the desired output level as a function of wavelength. Feedback correction signals are generated in the control board, which are applied 89 as the pixel voltages for each pixel in the dynamic gain equalizer. The controller board can preferably be programmed to provide as flat a response as possible. According to another preferred embodiment of the invention, the control voltages are adjusted to be such as to enable the synthesis of a predefined spectral profile. This application is useful for generating power spectra which precompensate for the spectral response of the system into which they are working. Thus, for instance, if it is known that higher frequencies are attenuated in a certain transmission network, it is possible, using this preferred embodiment to taper the power profile to provide more power output at the high frequency end of the wavelength range used. Alternatively and preferably, the output profile can be tailored to block a predefined wavelength band if so required. Such applications are further described in the co-pending US Provisional Patent Application No. 60/327,680 for "Fiber Optical Gain Equalizer" and its corresponding PCT application, assigned to the applicant of the present application, and herewith incorporated by reference in its entirety.

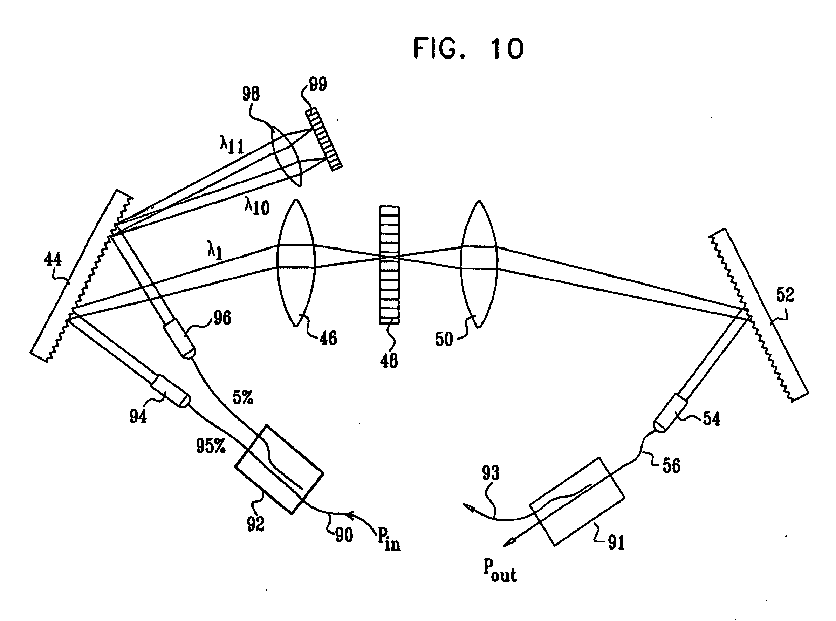

Reference is now made to Fig. 10, which illustrates a system, according to a further preferred embodiment of the present invention, for practically implementing the schematic block diagram of Fig. 9. The preferred embodiment shown in Fig. 10 shows components for internally determining the wavelength profile of the input signal, such that the correction function necessary to gain equalize or to otherwise process the wavelength profile of the input signal can be performed, and also components for determining the wavelength profile of the output signal, such that the equalizer can be operated in closed loop configuration to maintain the desired output profile without the need to know the input profile. The monitoring components are incorporated respectively at the input and the output to the dynamic gain equalizer, such as that illustrated in Fig. 4. Items common to the embodiment shown in Fig. 4 are labeled with the same reference characters as in Fig. 4. The input signal power Pᵢₙ 90 is fed into a power splitter 92, where typically 5% of the power is split off for monitoring purposes, though values of less than 5% can also equally effectively be used. Both the 5% monitoring power and the remaining 95% of the main power are input, by means of collimating units 94, 96, into the dynamic gain equalizer for processing. The collimator of the main power 94 is aligned at an angle such that the light is incident onto the dispersive grating 44 so that it is incident on the input lens 46, traverses the remainder of the optical path of the gain equalizer and is processed optically as shown in the embodiment of Fig. 4. For the sake of clarity, only one input wavelength path λ₁ is shown.

The collimator unit 96 of the 5% monitoring power input is aligned at a different angle, such that the monitoring power is incident on the dispersive grating at such an angle that the reflected beams for the different input monitored wavelengths are directed into an auxiliary imaging lens 98, which focuses the different beams onto a linear detector 99, such as an InGaAs linear array. Two wavelengths λ₁₀ and λ₁₁ are shown, and each is incident on the linear array at a position which is specific to the particular wavelength. The output signals from the linear array can thus be used to define the wavelength profile of the incident signal Pᵢₙ which it is desired to process or equalize.

Though the embodiment shown in Fig. 10 utilizes a power coupler to divide off part of the incident power for monitoring, this function can equally well be performed by using a beam splitter, or even a partially reflecting coating to divide off a small part of the power as is known in the art. These components are then angled such that the divided off power sample is directed to a separate part of the dispersive element, as shown in Fig. 9.

The embodiment shown in Fig. 10 is described as an open loop system, in which it is the input power which is sampled in order to determine its spectral shape for correction. According to further preferred embodiments of the present invention, a similar arrangement can be used at the output of the dynamic gain equalizer, in an output power feedback loop, to fulfil the functions of the power splitter 84 and the wavelength sensitive detector 86 shown in the schematic block diagram of Fig. 9. Such a preferred arrangement is shown on the output side of the equalizer, whereby a second power coupler 91 is located in the output line 56, and splits off a portion 93 of the output power. This output power can then be spectrally analyzed, preferably by using one of the gratings of the equalizer, and a linear detector array, similar to the arrangement shown for the input power monitor. The output signals from the detector array can then be used for input to the pixellated attenuator element so as to process the output signal profile as desired, as explained in relation to the block diagram of Fig. 9.

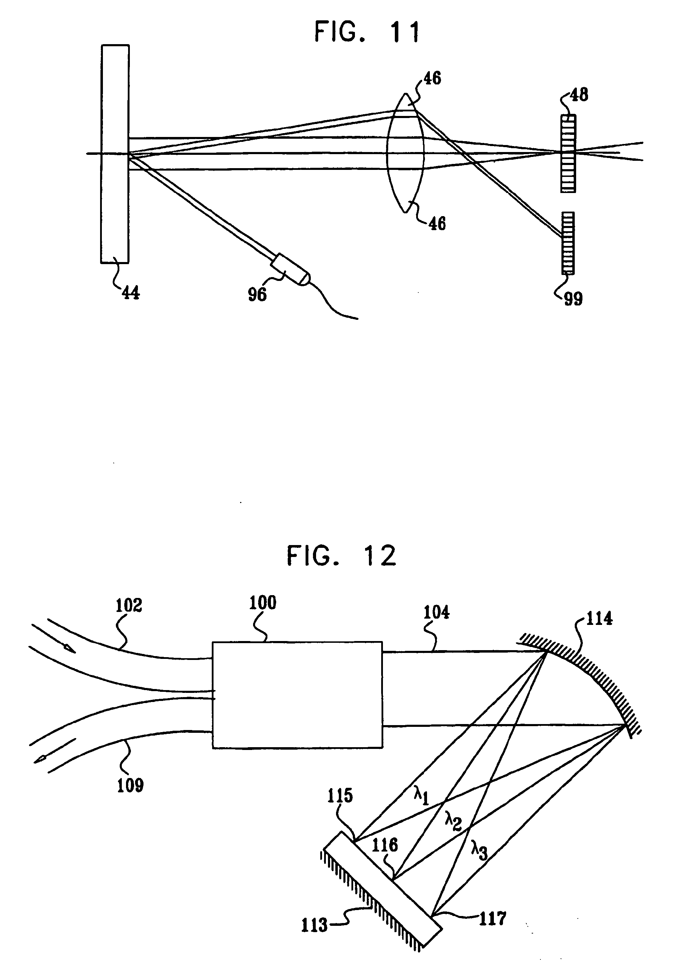

Reference is now made to Fig. 11, which schematically illustrates an alternative and preferable method of handling the monitored power to that described in Fig. 10. According to the embodiment of Fig. 10, the main beam and the split-off monitor beams lie in the same plane, and an additional focusing lens 98 is thus required to project the monitored beam onto its detector array. In the embodiment shown in Fig. 11, which is a side view of the system, viewed from within the plane of the paper of Fig. 10, the monitor collimator 96 is located below the optical plane of Fig. 10, and is aligned such that the monitor beam is projected at an angle to that plane. The advantage of this geometry is that the dispersed monitoring beam can be imaged onto its linear detector array 99 by means of the same lens 46 that is used to image the main beam onto the pixelated attenuator element 48. The linear detector array 99 can then be conveniently located just beneath the attenuator element 48. Such an arrangement not only allows a more compact system to be constructed, but it is also economical on component utilization.

Though the above described preferred embodiments have been described in terms of a transmissive liquid crystal pixellated attenuating element, it is also possible to execute the present invention, according to more preferred embodiments, using a reflective mode liquid crystal pixelated attenuating element Reference is now made to Fig. 12, which is a schematic drawing of the optical arrangement of such a dynamic gain equalizer, constructed and operative according to another preferred embodiment of the present invention, using a reflective pixelated attenuating element. A dual fiber collimator 100 is preferably used as the input/output device. The signal to be attenuated is input by the fiber 102, and is preferably converted by the dual fiber collimator 100 into an approximately collimated output beam 104. A dispersive reflective grating 114 separates the input signal beam 104 into separate wavelength channels λ₁, λ₂, λ₃ ......, each of which falls onto a different spatial location 115, 116, 117, on a pixelated reflective attenuating element 113, which operates in the same manner as the transmissive pixelated attenuating element 48 of the embodiment of Fig. 4, except that it is reflective instead of transmissive. Each spatial location is associated with a separate pixel of the phase-changing liquid crystal element, such that each wavelength channel can be individually controlled by a separate pixel. The reflected, attenuated channels are recombined by the same grating 114 as was operative to disperse the input signal, and are input to the dual fiber collimator 100, from which the recombined gain equalized signal is output on fiber 109.

In the free-space schematic embodiment illustrated in Fig. 12, no signal strength detectors area shown, and the individual channel signal levels may preferably be determined at a remote site. Alternatively and preferably, the signal levels may preferably be determined by any of the signal monitoring methods shown in the transmissive embodiments described hereinabove. Alternatively and preferably, the reflective pixelated phase-changing element 113 may be of an integrated type containing an array of detectors, such as those described in co-pending Israel Patent Application Nos. 141927 and 142773, for "Fiber Optical Attenuator", and their corresponding PCT applications (WO 02/071660, WO 02/071133), and the individual channel signal strengths adjusted on-line. This embodiment thus enables a compact and cost-effective gain-equalizing unit.

In the optical embodiment shown in Fig. 12, an approximately collimated beam 104 is shown at the output of the dual-fiber collimator 100. It is to be understood that this embodiment is only one possible configuration of this aspect of the invention. The above described reflective dynamic gain equalizer can be equally well constructed using alternative optical set-ups, such as with a dual fiber collimating coupler outputting a point source, and a beam expander to diverge the output beam, or with any other suitable combination of optical elements for beam forming and focusing purposes. Likewise, a lens can preferably be used at the output of the dual fiber collimator 100 to ensure that the collimated beam 104 properly fills the aperture of the dispersive grating 114. Furthermore, in the embodiment shown in Fig. 12, a concave grating 114 is used as the dispersive element, such that the light from each channel is focussed by the grating itself onto the reflective pixelated phase-changing element.

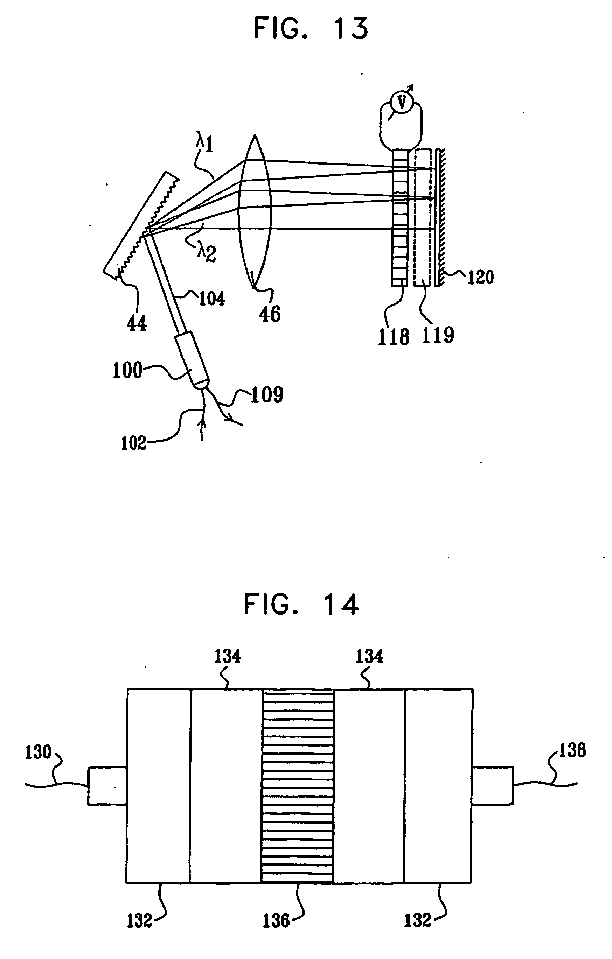

Reference is now made to Fig. 13, which schematically illustrates another preferred configuration of this embodiment, which is essentially a reflective embodiment of the gain equalizer shown in Fig. 4. A dual fiber collimator 100 is preferably used as the input/output device. The signal to be attenuated is input by the fiber 102, and is preferably converted by the dual fiber collimator 100 into an approximately collimated output beam 104. A preferably plane dispersive reflective grating 44 separates the input signal beam 104 into separate wavelength channels, only two of which are show for clarity λ₁, λ₂. The separate wavelength channels are imaged by a lens 46, each onto a different spatial location on the pixelated attenuating element 118, which is rendered reflective preferably by virtue of a reflective coating or mirror 120 situated downstream of the attenuating element 118. The pixelated attenuating element operates in the same manner as the transmissive pixelated attenuating element 48 of the embodiment of Fig. 4, except that it is reflective instead of transmissive. Each spatial location is associated with a separate pixel of the liquid crystal element, such that each wavelength channel can be individually controlled by the voltage applied to a separate pixel. The reflected, attenuated channels are refocused by the lens 46 onto the same grating 44 as was operative to disperse the input signal, and are there recombined into one beam which is input to the dual fiber collimator 100, from which the gain equalized signal is output on fiber 109. If desired, a quarter wave plate 119 can preferably be located behind the pixelated attenuating element in order to compensate for polarization dependent loss in the various components of the system, as is known in the art. Since the beam makes two traverses through this quarter wave plate, the effect is that of a half wave plate, as described in relation to the embodiment shown in Fig. 4.

According to further preferred embodiments of the present invention, instead of a dual fiber collimator, a circulator can be used at the input/output port to separate the input from the output beams, as is well known in the art.

Reference is now made to Fig. 14, which is a schematic cross section of another preferred embodiment of the present invention, in which the gain equalizer is constructed in a particularly compact monolithic form by juxtaposing together micro-manufactured parts, such as could be produced by micro-lithographic processes. In the preferred embodiment shown, the input fiber 130 is preferably attached to either a micro-prism or to a transmission grating 132, and the light beam is transferred to the pixelated attenuator element 136 by means of a GRIN lens or a diffractive optical element 134. After traversing the attenuator element 136, a similar GRIN lens or a diffractive optical element 134 is used to image the output beam back down onto the output dispersive element 132, and from there, into the output fiber 138.

It is appreciated by persons skilled in the art that the present invention is not limited by what has been particularly shown and described hereinabove. Rather the scope of the present invention includes both combinations and subcombinations of various features described hereinabove as well as variations and modifications thereto which would occur to a person of skill in the art upon reading the above description and which are not in the prior art.

## Claims

1. A gain equalizer comprising:
a port (12) receiving light comprising at least two wavelength components;
a dispersive element (14) receiving said light and spatially dispersing said wavelength components of said light along a dispersion direction;
a plurality of variable optical attenuating elements (16) disposed generally along said dispersion direction, such that each of said attenuating elements is traversed by a different wavelength component of said light; and
an output optical path adapted to combine said different wavelength components of said light after passage through said attenuating elements, for output from said gain equalizer,
wherein each of said variable optical attenuating elements (16) is adapted to vary the level of light traversing it, and at least one of said variable optical attenuating elements (16) comprises a variable phase changing element operative to change the phase of part of the cross section of light (38) passing through it.

2. A gain equalizer according to claim 1 and wherein said output optical path comprises:
a second dispersive element (52) receiving light after passage through said plurality of variable optical attenuating elements (48), and operative to combine wavelength components of said light into an output beam; and
a second port (54) receiving and outputting said output beam.

3. A gain equalizer according to claim 1 and wherein said output optical path comprises:
a reflective surface (120) operative to reflect light back through said plurality of variable optical attenuating elements (118);
said dispersive element (44), adapted to combine said wavelength components of said reflected light into an output beam; and
said port (100) receiving and outputting said output beam.

4. A gain equalizer according to any of the previous claims and also comprising a controller operative to vary the attenuation of at least one of said variable attenuators, such that the light passing through said attenuator has a predefined level.

5. A gain equalizer according to claim 4 and also comprising a spectrally selective detector providing to said controller at least one signal to adjust the attenuation of at least one of said variable attenuators, said signal corresponding to the power level of at least one of said wavelength components.

6. A gain equalizer according to claim 5 and wherein said detector is located such that it measures the power level of at least one of said wavelength components in said output beam.

7. A gain equalizer according to claim 5 and wherein said detector is located such that it measures the power level of at least one of said wavelength components of said light in said input port.

8. A gain equalizer according to any of the previous claims and wherein said phase changing element is a liquid crystal element

9. A gain equalizer according to claim 5 as dependent on claim 2 and wherein said spectrally selective detector is a linear detector array utilizing one of said dispersive elements for performing said spectral selection.

10. A gain equalizer according to claim 2 or any of claims 3 to 9 as dependent on claim 2 and also comprising a half wave plate serially with said plurality of attenuators, operative to reduce the polarization dependent loss of said gain equalizer

11. A gain equalizer according to claim 3 or any of claims 4 to 8 as dependent on claim 3 and also comprising a quarter wave plate serially with said plurality of attenuators, operative to reduce the polarization dependent loss of said gain equalizer

12. A gain equalizer according to claim 3 or any of claims 4 to 8 as dependent on claim 3 and wherein said light received by said port and said output beam are separated by means of either of a dual fiber collimator and a circulator.

13. A gain equalizer according to any of the previous claims, wherein said light traverses said gain equalizer by free space propagation.

14. A multichannel optical gain equalizer comprising:
an input fiber (12) receiving a multi-wavelength input;
a demultiplexer (14) fed by said input fiber (12), having a plurality of output wavelength channels;
an output fiber (22) outputting a multi-wavelength output;
a multiplexer (20) feeding said output fiber (22), having a plurality of input wavelength channels;
a plurality of variable optical attenuators (16) disposed between said output channels of said demultiplexer (14) and said input channels of said multiplexer (20); and
at least one signal detector (18) detecting the power in at least one of said input wavelength channels of said multiplexer (20), and operative to adjust the attenuation of said attenuator (16) in said at least one input wavelength channel according to the level of said signal detected;
wherein each of said variable optical attenuators (16) is adapted to vary the level of light traversing it, and at least one of said variable optical attenuator comprises a variable phase changing unit operative to change the phase of part of the cross section of light (38) passing through it.

15. A multichannel gain equalizer according to claim 14, and wherein said at least one signal detector detecting the power in at least one of said input wavelength channels of said multiplexer is a spectrally selective detector in series with said output fiber.

16. A multichannel gain equalizer according to claim 14 and wherein said at least one signal detector is located remotely from said grain equalizer.

17. A multichannel gain equalizer according to any of claims 14 to 16 and wherein said phase changing element is a liquid crystal element.

## Patentansprüche

1. Verstärkungsentzerrer, umfassend:
einen Anschluss (12), der Licht empfängt, das mindestens zwei Wellenlängenkomponenten umfasst;
ein Zerstreuungselement (14), das das Licht empfängt und die Wellenlängenkomponenten des Lichts entlang einer Zerstreuungsrichtung räumlich zerstreut;
eine Vielzahl von variablen optischen Dämpfungselementen (16), die im Allgemeinen entlang der Zerstreuungsrichtung derart angeordnet sind, dass jedes der Dämpfungselemente von einer verschiedenen Wellenlängenkomponente des Lichts durchlaufen wird; und
einen Ausgabe-Strahlenweg, der angepasst ist, um die verschiedenen Wellenlängenkomponenten des Lichts nach der Passage durch die Dämpfungselemente zur Ausgabe von dem Verstärkungsentzerrer zu kombinieren,
wobei jedes der variablen optischen Dämpfungselemente (16) angepasst ist, um den Pegel des Lichts, das es durchläuft, zu variieren, und mindestens eines der variablen optischen Dämpfungselemente (16) ein variables Phasenänderungselement umfasst, das betriebsfähig ist, um die Phase eines Teils des Querschnitts des Lichts (38), das es durchläuft, zu wandern.

2. Verstärkungsentzerrer nach Anspruch 1 und wobei der Ausgabe-Strahlenweg umfasst:
ein zweites Zerstreuungselement (52), das Licht nach der Passage durch die Vielzahl von variablen optischen Dämpfungselemente (48) empfängt und betriebsfähig ist, um Wellenlängenkomponenten des Lichts zu einem Ausgabestrahl zu kombinieren; und
einen zweiten Anschluss (54), der den Ausgabestrahl empfängt und ausgibt.

3. Verstärkungsentzerrer nach Anspruch 1 und wobei der Ausgabe-Strahlenweg umfasst:
eine reflektierende Oberfläche (120), die betriebsfähig ist, um Licht zurück durch die Vielzahl von variablen optischen Dämpfungselemente (118) zu reflektieren;
wobei das Zerstreuungselement (44) angepasst ist, um die Wellenlängenkomponenten des reflektierten Lichts zu einem Ausgabestrahl zu kombinieren; und
den Anschluss (100), der den Ausgabestrahl empfängt und ausgibt.

4. Verstärkungsentzerrer nach einem der vorstehenden Ansprüche und außerdem eine Steuerung umfassend, die betriebsfähig ist, um die Dämpfung von mindestens einem der variablen Dämpfer derart zu variieren, dass das Licht, das den Dämpfer durchläuft, einen im Voraus definierten Pegel aufweist.

5. Verstärkungsentzerrer nach Anspruch 4 und außerdem einen spektral selektiven Detektor umfassen, der der Steuerung mindestens ein Signal bereitstellt, um die Dämpfung von mindestens einem der variablen Dämpfer einzustellen, wobei das Signal mit dem Leistungspegel von mindestens einer der Wellenlängenkomponenten korrespondiert.

6. Verstärkungsentzerrer nach Anspruch 5 und wobei der Detektor derart angeordnet ist, dass er den Leistungspegel von mindestens einer der Wellenlängenkomponenten in dem Ausgabestrahl misst.

7. Verstärkungsentzerrer nach Anspruch 5 und wobei der Detektor derart angeordnet ist, dass er den Leistungspegel von mindestens einer der Wellenlängenkomponenten des Lichts in dem Eingabeanschluss misst.

8. Verstärkungsentzerrer nach einem der vorstehenden Ansprüche und wobei das Phasenänderungselement ein Flüssigkristallelement ist.

9. Verstärkungsentzerrer nach Anspruch 5 in Abhängigkeit von Anspruch 2 und
wobei der spektral selektive Detektor eine lineare Detektoranordnung ist, die eines der Zerstreuungselemente zum Durchführen der spektralen Selektion nutzt.

10. Verstärkungsentzerrer nach Anspruch 2 oder einem der Ansprüche 3 bis 9 in Abhängigkeit von Anspruch 2 und außerdem eine Halbwellenplatte in Reihe mit der Vielzahl von Dämpfern umfassend, die betriebsfähig ist, um den polarisationsabhängigen Verlust des Verstärkungsentzerrers zu reduzieren.

11. Verstärkungsentzerrer nach Anspruch 3 oder einem der Ansprüche 4 bis 8 in Abhängigkeit von Anspruch 3 und außerdem eine Viertelwellenplatte in Reihe mit der Vielzahl von Dämpfern umfassend, die betriebsfähig ist, um den polarisationsabhängigen Verlust des Verstärkungsentzerrers zu reduzieren.

12. Verstärkungsentzerrer nach Anspruch 3 oder einem der Ansprüche 4 bis 8 in Abhängigkeit von Anspruch 3 und wobei das Licht, das von dem Anschluss empfangen wird, und der Ausgabestrahl mittels entweder eines Doppelfaser-Kollimators oder eines Zirkulators getrennt sind.

13. Verstärkungsentzerrer nach einem der vorstehenden Ansprüche, wobei das Licht den Verstärkungsentzerrer durch Freiraumausbreitung durchläuft.

14. Mehrkanal-Lichtwellen-Verstärkungsentzerrer, umfassend:
eine Eingabefaser (12), die eine Mehrwellenlängen-Eingabe empfängt;
einen Demultiplexer (14), der von der Eingabefaser (12) versorgt wird, mit einer Vielzahl von Ausgabewellenlängen-Kanälen;
eine Ausgabefaser (22), die eine Mehrwellenlängen-Ausgabe ausgibt;
einen Multiplexer (20), der die Ausgabefaser (22) versorgt, mit einer Vielzahl von Eingabewellenlängen-Kanälen;
eine Vielzahl von variablen optischen Dämpfern (16), die zwischen den Ausgabekanälen des Demultiplexers (14) und den Eingabekanälen des Multiplexers (20) angeordnet sind; und
mindestens einen Signaldetektor (18), der die Leistung in mindestens einem der Eingabewellenlängen-Kanäle des Multiplexers (20) detektiert und betriebsfähig ist, um die Dämpfung des Dämpfers (16) in dem mindestens einen Eingabewellenlängen-Kanal gemäß dem Pegel des detektierten Signals einzustellen;
wobei jedes der variablen optischen Dämpfungselemente (16) angepasst ist, um den Pegel des Lichts, das es durchläuft, zu variieren, und mindestens eines der variablen optischen Dämpfungselemente ein variables Phasenänderungselement umfasst, das betriebsfähig ist, um die Phase eines Teils des Querschnitts des Lichts (38), das es durchläuft, zu ändern.

15. Mehrkanal-Verstärkungsentzerrer nach Anspruch 14 und wobei der mindestens eine Signaldetektor, der die Leistung in mindestens einem der Eingabewellenlängen-Kanäle des Multiplexers detektiert, ein spektral selektiver Detektor in Reihe mit der Ausgabefaser ist.

16. Mehrkanal-Verstärkungsentzerrer nach Anspruch 14 und wobei der mindestens eine Signaldetektor entfernt von dem Verstärkungsentzerrer angeordnet ist.

17. Mehrkanal-Verstärkungsentzerrer nach einem der Ansprüche 14 bis 16 und wobei das Phasenänderungselement ein Fiüssigkristallelement ist.

## Revendications

1. Egaliseur de gain comprenant :
un port (12) recevant une lumière ayant au moins deux composantes de longueur d'onde ;
un élément dispersif (14) recevant ladite lumière et dispersant spatialement lesdites composantes de longueur d'onde de ladite lumière le long d'une direction de dispersion ;
une pluralité d'éléments d'atténuation optiques variables (16) disposés généralement le long de ladite direction de dispersion, de sorte que chacun desdits éléments d'atténuation soit traversé par une composante de longueur d'onde différente de ladite lumière ; et
un trajet optique de sortie adapté pour combiner lesdites différentes composantes de longueur d'onde de ladite lumière après leur passage à travers lesdits éléments d'atténuation, pour leur sortie dudit égaliseur de gain,
dans lequel chacun desdits éléments d'atténuation optiques variables (16) est adapté pour modifier le niveau de la lumière le traversant, et au moins l'un desdits éléments d'atténuation optiques variables (16) comprend un élément de modification de phase variable pouvant être utilisé pour modifier la phase d'une partie de la section transversale de la lumière (38) le traversant.

2. Egaliseur de gain selon la revendication 1 et dans lequel ledit trajet optique de sortie comprend :
un deuxième élément dispersif (52) recevant la lumière après son passage à travers ladite pluralité d'éléments d'atténuation optiques variables (48), et pouvant être utilisé pour combiner les composantes de longueur d'onde de ladite lumière en un faisceau de sortie ; et
un deuxième port (54) recevant et délivrant ledit faisceau de sorte.

3. Egaliseur de gain selon la revendication 1 et dans lequel ledit trajet optique de sortie comprend :
une surface réfléchissante (120) pouvant être utilisée pour renvoyer la lumière à travers ladite pluralité d'éléments d'atténuation optiques variables (118) ;
ledit élément dispersif (44), adapté pour combiner lesdites composantes de longueur d'onde de ladite lumière réfléchie en un faisceau de sortie ; et
ledit port (100) recevant et délivrant ledit faisceau de sortie.

4. Egaliseur de gain selon l'une quelconque des revendications précédentes et comprenant également un contrôleur pouvant être utilisé pour modifier l'atténuation d'au moins l'un desdits atténuateurs variables, de sorte que la lumière passant à travers ledit atténuateur ait un niveau prédéfini.

5. Egaliseur de gain selon la revendication 4 et comprenant également un détecteur spectralement sélectif fournissant audit contrôleur au moins un signal pour ajuster l'atténuation d'au moins l'un desdits atténuateurs variables, ledit signal correspondant au niveau de puissance d'au moins l'une desdites composantes de longueur d'onde.

6. Egaliseur de gain selon la revendication 5 et dans lequel ledit détecteur est situé de sorte qu'il mesure le niveau de puissance d'au moins l'une desdites composantes de longueur d'onde dans ledit faisceau de sortie.

7. Egaliseur de gain selon la revendication 5 et dans lequel ledit détecteur est situé de sorte qu'il mesure le niveau de puissance d'au moins l'une desdites composantes de longueur d'onde de ladite lumière dans ledit port d'entrée.

8. Egaliseur de gain selon l'une quelconque des revendications précédentes et dans lequel ledit élément de modification de phase est un élément de cristal liquide.

9. Egaliseur de gain selon la revendication 5 lorsqu'elle dépend de la revendication 2 et dans lequel ledit détecteur spectralement sélectif est un ensemble de détecteurs linéaires utilisant l'un desdits éléments dispersifs pour effectuer ladite sélection spectrale.

10. Egaliseur de gain selon la revendication 2 ou l'une quelconque des revendications 3 à 9 lorsqu'elles dépendent de la revendication 2 et comprenant également une lame demi onde en série avec ladite pluralité d'atténuateurs, pouvant être utilisée pour réduire la perte dépendant de la polarisation dudit égaliseur de gain.

11. Egaliseur de gain selon la revendication 3 ou l'une quelconque des revendications 4 à 8 lorsqu'elles dépendent de la revendication 3 et comprenant également une lame quart d'onde en série avec ladite pluralité d'atténuateurs, pouvant être utilisée pour réduire la perte dépendant de la polarisation dudit égaliseur de gain.

12. Egaliseur de gain selon la revendication 3 ou l'une quelconque des revendications 4 à 8 lorsqu'elles dépendent de la revendication 3 et dans lequel ladite lumière reçue par ledit port et ledit faisceau de sortie sont séparés au moyen de l'un ou l'autre d'un collimateur à fibre double et d'un circulateur.

13. Egaliseur de gain selon l'une quelconque des revendications précédentes, dans lequel ladite lumière traverse ledit égaliseur de gain par propagation en espace libre.

14. Egaliseur de gain optique multicanal comprenant:
une fibre d'entrée (12) recevant une entrée à longueurs d'onde multiples ;
une démultiplexeur (14) alimenté par ladite fibre d'entrée (12), comportant une pluralité de canaux de longueur d'onde de sortis
une fibre de sortie (22) délivrant une sortie à longueurs d'onde multiples ;
un multiplexeur (20) alimentant ladite fibre de sortie (22), comportant une pluralité de canaux de longueur d'onde d'entrée ;
une pluralité d'atténuateurs optiques variables (16) disposés entre lesdits canaux de sortie dudit démultiplexeur (14) et lesdits canaux d'entrée dudit multiplexeur (20) ; et
au moins un détecteur de signal (18) détectant la puissance dans au moins l'un desdits canaux de longueur d'onde d'entrée dudit multiplexeur (20), et pouvant être utilisé pour ajuster l'atténuation dudit atténuateur (16) dans ledit au moins un canal de longueur d'onde d'entrée en fonction du niveau dudit signal détecté ;
dans lequel chacun desdits atténuateurs optiques variables (16) est adapté pour modifier le niveau de la lumière le traversant, et au moins l'un desdits atténuateurs optiques variables comprend une unité de modification de phase variable pouvant être utilisée pour modifier la phase d'une partie de la section transversale de la lumière (38) le traversant.

15. Egaliseur de gain multicanal selon la revendication 14, et dans lequel ledit au moins un détecteur de signal détectant la puissance dans au moins l'un desdits canaux de longueur d'onde d'entrée dudit multiplexeur est un détecteur spectralement sélectif en série avec ladite fibre de sortie.

16. Egaliseur de gain multicanal selon la revendication 14 et dans lequel ledit au moins un détecteur de signal est situé à distance dudit égaliseur de gain.

17. Egaliseur de gain multicanal selon l'une quelconque des revendications 14 à 16 et dans lequel ledit élément de modification de phase est un élément de cristal liquide.
